# EUROPEAN PATENT APPLICATION

(11) **EP 2 141 336 A2**
(43) Date of publication of application: **06.01.2010**
(21) Application number: 09163667.0
(22) Date of filing: 24.06.2009
(51) Int. Cl.: F02C 6/08

(54) **Systems and methods for supplying cooling air to a gas turbine**

(30) Priority: 02.07.2008 US 166689
(71) Applicant: General Electric Company, Schenectady, NY 12345 (US)
(72) Inventor: Snook, Daniel David, Moore, SC 29369 (US); Labelle, Joseph Benjamin, Fishers, IN 46037 (US)
(74) Representative: Gray, Thomas

(57) **Abstract**

A system and method for supplying cooling air to the turbine section (13) of a gas turbine (10). The system may include a compressed air supply (22), an ambient air supply (23), and an ejector (24) for entraining the ambient air supply with the compressed air supply to form a cooling air supply. In a gas turbine including a compressor section and a turbine section (11), the method may include extracting compressed air from the compressor section (11), entraining ambient air with the compressed air to form cooling air, and directing the cooling air to the turbine section (13).

## Description

### TECHNICAL FIELD

The present application relates generally to systems and methods for operating a gas turbine and more particularly relates to systems and methods for supplying cooling air to the last stage of a gas turbine.

### BACKGROUND OF THE INVENTION

A typical gas turbine may include a compressor section, a combustion section, and a turbine section. The gas turbine may include an annular flow path for conducting gases sequentially through the compressor, combustor, and turbine sections. Ambient air may enter the gas turbine through the compressor. The compressor may include an array of rotating blades and non-rotating stator vanes, defining a series of stages. The rotating blades may compress the ambient air and the non-rotating stator vanes may orient the flow of air for optimum transfer of energy.

The flow of compressed air exiting the compressor may be directed to the combustion section. A fuel may be added to the compressed air in the combustor. The mixture of fuel and compressed air may be burned in a combustion process, which may generate a heated gas. The heated gas then may be expanded through the turbine section of the gas turbine. The turbine section may include another array of rotating blades and non-rotating stator vanes, also defining a series of stages. The turbine blades may be connected to a rotating shaft which may be coupled with the compressor and/or a generator or other load. The interaction of the heated gas and the turbine blades may transfer energy to the turbine blades, thereby providing useful work.

The expansion of the heated gas through the turbine section may raise the temperature of the turbine blades and stator vanes. During operation, rotational forces may introduce significant stresses on the rotating structures within the turbine section. Increases in temperature may reduce the allowable stress and may degrade the structural integrity of the materials used in the turbine section. Thus, the temperature characteristics of the materials used in the turbine section may limit the allowable temperature of the turbine section. In order to maintain the temperature of the turbine section within allowable limits, cooling systems may be provided in the turbine stator vanes.

A cooling system may include means to conduct cooling air into the hollow body of the stator vanes. Typically, compressor bleed air extracted from the compressor section may be used as a source of cooling air. The cooling air may pass through the portion of the stator vanes that extends through the flow path of the heated gas. The cooling fluid then may be exhausted through the radially inner portion of the stator vanes. A sealing cavity, disposed radially inward of the stator vanes, may receive the flow of the cooling air exhausted through the stator vanes. The cooling air then may cool the rotating seals and other structures in and near the sealing cavity. The cooling air also may help purge and seal the sealing cavity by increasing the pressure within the sealing cavity. The cooling air may be vented to the flow path of the heated gas.

A drawback to such a cooling system may be the reduced efficiency of the gas turbine as a result of the diversion of compressed air from the compressor section to cool and seal the turbine section. In particular, the last stage of the turbine section may be supplied with compressor extraction air at a higher pressure than is necessary to meet cooling and sealing requirements. The air pressure of the compressor bleed air may be lowered to an acceptable level through an orifice plate. The pressure drop through the orifice plate may result in a loss to the gas turbine cycle because the cooling and sealing air for the last turbine stage is compressed to a higher pressure than is required for cooling and sealing.

There is a desire, therefore, to provide a more efficient system and method for supplying cooling and sealing air to the turbine section of a gas turbine. There is a particular desire to provide a more efficient system and method for supplying cooling and sealing air to the last stage of the turbine section of a gas turbine. Such a system and method may improve the overall efficiency and output of a gas turbine.

### BRIEF DESCRIPTION OF THE INVENTION

In one embodiment, the present application provides a system for supplying cooling air to a turbine section of a gas turbine. The system may include a compressed air supply, an ambient air supply, and an ejector for entraining the ambient air supply with the compressed air supply to form a cooling air supply.

Another embodiment of the present application provides a gas turbine. The gas turbine may include a compressor and a bleed for extracting compressed air from the compressor. The gas turbine also may include an ejector, wherein the ejector entrains ambient air with the compressed air to form a cooling air. The gas turbine further may include a turbine having a number of stages and a conduit for directing the cooling air from the ejector to the last stage of the turbine.

A further embodiment of the present application provides a method for supplying cooling air to the turbine section of a gas turbine having a compressor section and a turbine section. The method may include extracting compressed air from the compressor section, entraining ambient air with the compressed air to form cooling air, and directing the cooling air to the turbine section.

These and other features of the present application will become apparent to one of ordinary skill in the art upon review of the following detailed description when taken in conjunction with the several drawings and the appended claims.

### BRIEF DESCRIPTION OF THE DRAWINGS

There follows a detailed description of embodiments of the invention, by way of example only, with reference to the accompanying drawings, in which:

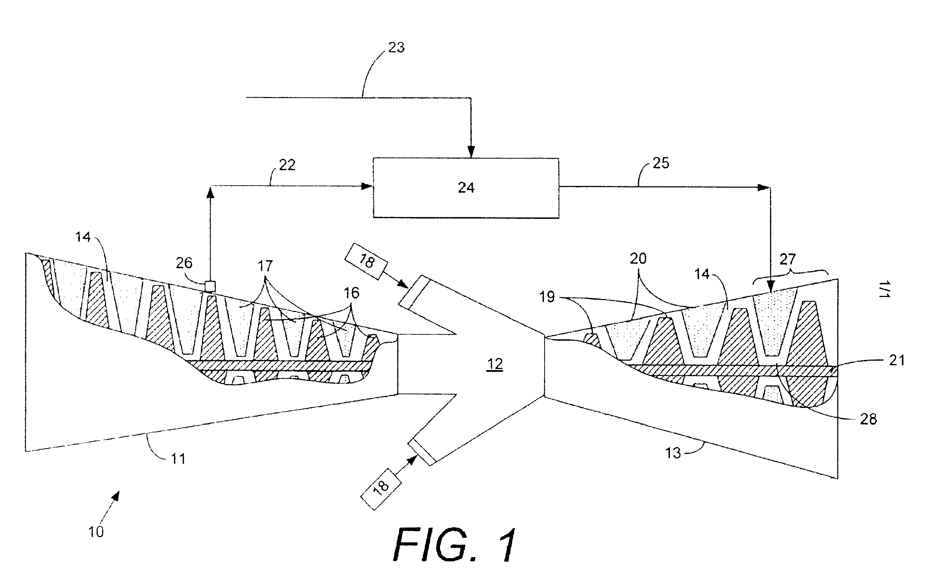

FIG. 1 is a schematic view of a gas turbine as is described herein.

### DETAILED DESCRIPTION OF THE INVENTION

Described below are embodiments of systems and methods for supplying cooling and/or sealing air to the turbine section of a gas turbine. Referring now to the drawings, FIG. 1 shows a schematic view of a gas turbine 10 of an embodiment of the present application. The gas turbine 10 may include a compressor section 11, a combustion section 12, and a turbine section 13. The gas turbine 10 may include an annular flow path 14 for conducting gases sequentially through the compressor section 11, combustion section 12, and turbine section 13.

Ambient air may enter the gas turbine 10 through an intake of the compressor section 11. The compressor section 11 may include an array of rotating compressor blades 16 and non-rotating compressor stator vanes 17, defining a series of stages. Any number of stages may be used herein. In a particular embodiment, the compressor section 11 may have between 15 and 20 stages. In another embodiment, the compressor section 11 may have 18 stages. As the air passes sequentially through the stages, the rotating compressor blades 16 may compress the ambient air, and the non-rotating compressor stator vanes 17 may orient the flow of air for optimum transfer of energy. The compressor section 11 generates a flow of compressed air.

The flow of compressed air exiting the compressor section 11 may be directed to the combustion section 12. A fuel 18 may be added to the compressed air in the combustion section 12. The mixture of fuel and compressed air may be burned in a combustion process, which may generate a heated gas. The heated gas then may be expanded through the turbine section 13 of the gas turbine 10. The turbine section 13 may include an array of rotating turbine blades 19 and non-rotating turbine stator vanes 20, defining a series of stages. Any number of stages may be used herein. In a particular embodiment, the turbine section 13 may have three stages. In another embodiment, the turbine section 13 may have four stages. The turbine blades 19 may be connected to a rotating shaft 21 which may be coupled with the compressor section 11 and/or a generator (not shown). The interaction of the heated gas and the turbine blades 19 may transfer energy to the turbine blades 19, thereby providing useful work.

A system may be provided for supplying cooling air to the turbine section 13 of the gas turbine 10. The system may include a compressed air supply 22, an ambient air supply 23, and an ejector 24 for entraining the ambient air supply 23 with the compressed air supply 22 to form a cooling air supply 25. In a particular embodiment, the ejector 24 may include a nozzle for accelerating the compressed air supply 22 through the ejector 24. In a further embodiment, the compressed air supply may include a bleed 26 for extracting compressed air from the compressor section 11 of the gas turbine 10. In another embodiment, the bleed may be located so as to extract compressed air from the ninth stage of the compressor section 11. The bleed may be located so as to extract compressed air from other stages in accordance with other embodiments of the application.

The cooling air supply 25 formed by entraining ambient air 23 with the compressed air 22 may be directed to the turbine section 13 of the gas turbine 10. In a particular embodiment, the system may include means for directing the cooling air supply 25 from the ejector 24 to the turbine section 13. In a particular embodiment, the means for directing the cooling air supply 25 from the ejector 24 to the turbine section 13 may include a conduit. In another embodiment, the cooling air supply 25 may be directed from the ejector 24 to the turbine section 13 through the turbine casing. In a further embodiment, the cooling air supply 25 may be directed from the ejector 24 to a plenum at a pressure sufficient to meet outflow margin and purge flow design requirements of the last stage stator vanes.

The turbine section 13 of the gas turbine 10 may have a number of stages. In a particular embodiment the cooling air supply 25 may be directed to the last stage 27 of the turbine section 13. In another embodiment, the last stage 27 of the turbine section 13 may include an array of stator vanes. The stator vanes may have hollow bodies, and the cooling air 25 may be directed to the hollow body of the stator vanes. The cooling air 25 may pass through the portion of the stator vanes which extends through the flow path 14 of the heated gas. The cooling fluid then may be exhausted through the radially inner portion of the stator vanes. A sealing cavity 28, disposed radially inward of the stator vanes, may receive the flow of cooling air exhausted through the stator vanes. The cooling air then may cool the rotating seals and other structures in and near the sealing cavity 28. The cooling air also may help purge and seal the sealing cavity 28 by increasing the pressure within the sealing cavity 28.

In a further embodiment an orifice plate may be provided between the ejector 24 and the turbine section 13. The orifice plate may reduce the pressure of the cooling air supply 25 to a predetermined level.

It should be apparent that the foregoing relates only to the preferred embodiments of the present application and that numerous changes and modifications may be made herein by one of ordinary skill in the art without departing from the general spirit and scope of the invention as defined by the following claims and the equivalents thereof.

Various aspects and embodiments of the present invention are now defined by the following numbered clauses:
1. A system for supplying cooling air to a turbine section of a gas turbine, comprising:
   a compressed air supply,
   an ambient air supply, and
   an ejector for entraining the ambient air supply with the compressed air supply to form a cooling air supply.
2. The system of clause 1, wherein the compressed air supply comprises a bleed for extracting compressed air from a compressor of the gas turbine.
3. The system of clause 2, wherein the compressor has about 18 stages.
4. The system of clause 3, wherein the bleed is located about the ninth stage of the compressor.
5. The system of clause 1, further comprising a conduit for directing the cooling air supply from the ejector to the turbine section.
6. The system of clause 5, wherein the turbine section has a plurality of stages, and wherein the conduit directs the cooling air to the last stage of the turbine.
7. The system of clause 6, wherein the last stage of the turbine comprises an array of stator vanes, and wherein the conduit directs the cooling air to a hollow body of the stator vanes.
8. The system of clause 1, further comprising a nozzle for accelerating the compressed air through the ejector.
9. The system of clause 1, wherein the cooling air seals a space between a stator and a rotor of the turbine section.
10. A gas turbine, comprising:
   a compressor,
   a bleed for extracting compressed air from the compressor,
   an ejector, wherein the ejector entrains ambient air with the compressed air to form a cooling air,
   a turbine having a plurality of stages, and
   a conduit for directing the cooling air from the ejector to the last stage of the turbine.
11. The gas turbine of clause 10, wherein the compressor has about 18 stages and the turbine has about 4 stages.
12. In a gas turbine comprising a compressor section and a turbine section, a method for supplying cooling air to the turbine section, comprising:
   extracting compressed air from the compressor section,
   entraining ambient air with the compressed air to form cooling air, and
   directing the cooling air to the turbine section.
13. The method of clause 12, wherein the ambient air is entrained with the compressed air using an ejector.
14. The method of clause 13, further comprising providing a nozzle, and accelerating the compressed air through the ejector.
15. The method of clause 12, wherein the compressor section has a plurality of stages, and wherein the compressed air is extracted from about the ninth stage.
16. The method of clause 12, wherein the turbine section has a plurality of stages, and wherein the cooling air is directed to the last stage of the turbine.
17. The method of clause 16, wherein the last stage of the turbine comprises an array of stator vanes, and wherein the cooling air is directed to a hollow body of the stator vanes.
18. The method of clause 12, wherein the cooling air seals a space between a stator and a rotor of the turbine section.

## Claims

1. A system for supplying cooling air (25) to a turbine section (13) of a gas turbine (10), comprising:
a compressed air supply (22),
an ambient air supply (23), and
an ejector (24) for entraining the ambient air supply (23) with the compressed air supply (22) to form a cooling air supply (25).

2. The system of claim 1, wherein the compressed air supply (22) comprises a bleed (26) for extracting compressed air from a compressor (11) of the gas turbine (10).

3. The system of claim 2, wherein the compressor (11) has about 18 stages.

4. The system of claim 3, wherein the bleed (26) is located about the ninth stage of the compressor (11).

5. The system of any of the preceding claims, further comprising a conduit for directing the cooling air supply (25) from the ejector (24) to the turbine section (13).

6. The system of claim 5, wherein the turbine section (13) has a plurality of stages, and wherein the conduit directs the cooling air (25) to the last stage of the turbine (13).

7. The system of claim 6, wherein the last stage of the turbine (13) comprises an array of stator vanes (20), and wherein the conduit directs the cooling air (25) to a hollow body of the stator vanes (20).

8. The system of any of the preceding claims, further comprising a nozzle for accelerating the compressed air (22) through the ejector (24).

9. The system of any of the preceding claims, wherein the cooling air (25) seals a space (28) between a stator (20) and a rotor (21) of the turbine section (13).

10. A gas turbine (10), comprising:
a compressor (11),
a bleed (26) for extracting compressed air from the compressor (11),
an ejector (24), wherein the ejector (24) entrains ambient air (23) with the compressed air (22) to form a cooling air (25),
a turbine (13) having a plurality of stages, and
a conduit for directing the cooling (25) air from the ejector (24) to the last stage of the turbine (13).

11. In a gas turbine comprising a compressor section and a turbine section, a method for supplying cooling air to the turbine section, comprising:
extracting compressed air from the compressor section,
entraining ambient air with the compressed air to form cooling air, and
directing the cooling air to the turbine section.

12. The method of claim 11, wherein the ambient air is entrained with the compressed air using an ejector.

13. The method of claim 12, further comprising providing a nozzle, and accelerating the compressed air through the ejector.

14. The method of any of claims 11 to 13, wherein the compressor section has a plurality of stages, and wherein the compressed air is extracted from about the ninth stage.

15. The method of any of claims 11 to 14, wherein the turbine section has a plurality of stages, and wherein the cooling air is directed to the last stage of the turbine.
